# EUROPEAN PATENT APPLICATION

(11) **EP 2 221 322 A1**
(43) Date of publication of application: **25.08.2010**
(21) Application number: 08858208.5
(22) Date of filing: 05.12.2008
(51) Int. Cl.: C08F 8/44, B32B 27/28, C08F 210/16, C08J 5/18, C08L 23/26, C08L 101/00

(54) **IONOMER, RESIN COMPOSITION CONTAINING THE IONOMER, UNSTRETCHED FILM, SHEET OR MOLDED BODY EACH MADE FROM THE COMPOSITION, AND LAMINATE HAVING LAYER OF THE UNSTRETCHED FILM**

(30) Priority: 07.12.2007 JP 2007317597
(71) Applicant: Du Pont-Mitsui Polychemicals Co., Ltd., Tokyo 105-7117 (JP)
(72) Inventor: MATSUZAKI, Daisuke, Tokyo 105-7117 (JP); SUZUKI, Kaoru, Ichihara-shi Chiba 299-0108 (JP); AKIYAMA, Koki, Ichihara-shi Chiba 299-0108 (JP)
(74) Representative: Gulde Hengelhaupt Ziebig & Schneider
(86) International application number: PCT/JP2008/072148
(87) International publication number: WO 2009/072600

(57) **Abstract**

[Problem] It is an object to provide an unstretched film and a sheet that are excellent in an antistatic property and transparency, a resin composition that is used in producing the unstretched film or the sheet and a potassium ionomer that is contained in the composition.

[Means for Solving Problem] Disclosed is a potassium ionomer of a polymer or a polymer composition that contains (a) an ethylene unit in the range of 30 to 60% by weight, (b) a propylene unit in the range of 30 to 60% by weight, (c) a butene unit in the range of 2 to 10% by weight, (d) a (meth)acrylic acid ester unit in the range of 0 to 10% by weight, and (e) a (meth) acrylic acid unit in the range of 5 to 15% by weight (with the total of the component units (a) to (e) being 100% by weight). The potassium ionomer has a potassium ion density in the range of 0.5 to 1.5 mmol/g.

## Description

### TECHNICAL FIELD

The present invention relates to an ionomer that is preferably used as a material of an unstretched film or a sheet, and a resin composition containing the ionomer.

### BACKGROUND ART

An ionomer resin has a special structure in which molecules such as ethylene-methacrylic acid copolymer and ethylene-acrylic acid copolymer are intermolecularly linked with a metal ion such as sodium and zinc, and is excellent in an antistatic property and transparency.

Among the ionomer resins, a potassium ionomer has an excellent antistatic performance and is known as a macromolecular antistatic agent. In particular, it is known that a resin composition containing a potassium ionomer and a polyolefin has an excellent antistatic property.

However, there is still room for improvement for transparency of an unstretched film that is made of a conventional resin composition in which a potassium ionomer is blended with a polyolefin, in particular a propylene polymer, depending on a kind and a composition of the resin composition.
Patent document 1: Japanese Patent Application Laid-Open Publication No. 2005-343973

### DISCLOSURE OF THE INVENTION

### PROBLEM TO BE SOLVED BY THE INVENTION

An object of the present invention is to provide an unstretched film and a sheet that are excellent in an antistatic property and transparency, a resin composition that is used in producing the unstretched film or the sheet and a potassium ionomer that is contained in the composition.

### MEANS FOR SOLVING THE PROBLEM

In order to solve the above problems of the conventional art, the present inventors have earnestly researched a potassium ionomer that has an excellent antistatic property and that can provide an excellent antistatic property and an excellent transparency in the case in which the potassium ionomer is blended with a thermoplastic resin, in particular a propylene polymer, and have completed the present invention.

The present invention includes the following items:
[1] A potassium ionomer of a polymer (x) or a polymer composition (y) that comprises (a) an ethylene unit in the range of 30 to 60% by weight, (b) a propylene unit in the range of 30 to 60% by weight, (c) a butene unit in the range of 2 to 10% by weight, (d) a (meth) acrylic acid ester unit in the range of 0 to 10% by weight, and (e) a (meth) acrylic acid unit in the range of 5 to 15% by weight (with the total of the component units (a) to (e) being 100% by weight), wherein the potassium ionomer has a potassium ion density in the range of 0.5 to 1.5 mmol/g.
[2] The resin composition that comprises the potassium ionomer (A) as defined in [1] in the range of less than 100 parts by weight to 2 parts by weight, and a thermoplastic resin or an elastomer (B) other than the potassium ionomer (A) in the range of from more than 0 part by weight to 98 parts by weight (with the total of the potassium ionomer and the thermoplastic resin or the elastomer being 100 parts by weight).
[3] The resin composition as defined in [2], wherein the thermoplastic resin is a polyolefin.
[4] The resin composition as defined in [2] or [3], wherein the thermoplastic resin is a propylene homopolymer or a propylene copolymer.
[5] The resin composition as defined in any one of [2] to [4], wherein the content of a (meth) acrylic acid residue in the resin composition is in the range of 0.1 to 15% by weight and the potassium ion density is in the range of 0.01 to 1.5 mmol/g.
[6] The potassium ionomer or the resin composition as defined in any one of [1] to [5], wherein the surface resistivity at 23°C and at a relative humidity (RH) of 50% is 1.0E + 11 Ω/sq or less.
[7] An unstretched film, a sheet, or a molded body each made of the potassium ionomer or the resin composition as defined in any one of [1] to [6].
[8] The unstretched film as defined in [7], wherein the haze is 20 or less.
[9] A laminate comprising at least one layer formed by the unstretched film made of the potassium ionomer or the resin composition as defined in any one of [1] to [6].
[10] A laminate wherein a polyolefin film is laminated on one surface or both surfaces of the unstretched film made of the potassium ionomer or the resin composition as defined in any one of [1] to [6].

### EFFECT OF THE INVENTION

An unstretched film, a sheet or other molded bodies each made of an ionomer according to the present invention or a resin composition containing the ionomer, and a laminate comprising the unstretched film according to the present invention have an excellent antistatic property, an excellent transparency and an excellent high-frequency fusion characteristics.

### BEST MODE OF CARRYING OUT THE INVENTION

### <Potassium ionomer>

A potassium ionomer of a polymer or a polymer composition according to the prevent invention comprises monomer units (a) to (e) in the following amounts and a part or all of the carboxyl group of the monomer unit (e) is neutralized by a potassium (ion) and the potassium ion density is in the range of 0.5 to 1.5 mmol/g.

### Polymer or polymer composition

A polymer or a polymer composition according to the present invention comprises the following monomer units (a) to (e) of the following amounts:
(a) an ethylene unit in the range of 30 to 60% by weight (preferably in the range of 30 to 50% by weight);
(b) a propylene unit in the range of 30 to 60% by weight (preferably in the range of 40 to 60% by weight);
(c) a butene unit in the range of 2 to 10% by weight (preferably in the range of 3 to 8% by weight);
(d) a (meth)acrylic acid ester unit in the range of 0 to 10% by weight (preferably in the range of 0 to 5% by weight); and
(e) a (meth)acrylic acid unit in the range of 5 to 15% by weight (preferably in the range of 7 to 14% by weight),
   (with the total of the monomer units (a) to (e) being 100% by weight).
In the invention, the polymer (x) means a single copolymer and the polymer composition (y) means a composition (blended material) of two or more kinds of polymers or a composition (blended material) of two or more kinds of copolymers. In other words, the polymer (x) of the invention means a copolymer comprising the monomer units (a) to (e) in the above amounts. The polymer composition (y) of the invention means a composition comprising the monomer units (a) to (e) in the above amounts, wherein the composition comprises two or more kinds of homopolymers, the homopolymer containing one kind of monomer unit selected from the monomer units (a) to (e) or comprises two or more kinds of copolymers, the copolymer containing two or more kinds of monomer units selected from the monomer units (a) to (e).

A (meth) acrylic acid according to the present invention means acrylic acid or methacrylic acid, and a (meth)acrylic acid ester according to the present invention means an acrylic acid ester or a methacrylic acid ester.

Examples of a monomer that derives a butene unit (c) include 1-butene and 2-butene.

Examples of a monomer that derives a (meth) acrylic acid ester unit (d) include an alkyl (meth)acrylate in which the number of carbons of an alkyl group is in the range of 1 to 10. More specifically, there can be mentioned methyl acrylate, ethyl acrylate, isopropyl acrylate, isobutyl acrylate, n-butyl acrylate, isooctyl acrylate, methyl methacrylate, ethyl methacrylate, isopropyl methacrylate, isobutyl methacrylate, n-butyl methacrylate and isooctyl methacrylate.

Examples of the homopolymer containing one kind of monomer unit selected from the monomer units (a) to (e) and examples of the copolymer containing two or more kinds of monomer units selected from the monomer units (a) to (e), the homopolymers and copolymers constituting the above polymer composition, include: polyethylene, polypropylene, polybutene, ethylene-methacrylic acid copolymer, ethylene-acrylic acid copolymer, ethylene-methyl acrylate copolymer, propylene-1-butene random copolymer, propylene-ethylene-1-butene random copolymer, polypropylene, polyethylene, polybutene, ethylene-butane copolymer and propylene-ethylene copolymer. Among them, ethylene-methacrylic acid copolymer, propylene-1-butene random copolymer, propylene-ethylene-1-butene random copolymer and propylene-ethylene copolymer are preferable.

As a method for producing the above homopolymer or copolymer, that is, a polymer that is used as a base polymer according to the present invention, a radical polymerization method at a high temperature and under a high pressure is commonly used.

A potassium ionomer of a polymer or a polymer composition according to the prevent invention is obtained by the below method.
(i) Monomers that derive the monomer units (a) to (e) (in which (d) is an arbitrary component) are copolymerized under a high pressure to form a polymer and a part or all of the carboxyl group of the polymer is neutralized with a potassium ion.
(ii) One or more kinds of monomers that derive the monomer units (a) to (d) (in which (d) is an arbitrary component) and a monomer that derives the monomer units (e) are copolymerized to form a copolymer and a part or all of the carboxyl group of the copolymer is neutralized with a potassium ion to form a potassium ionomer and the potassium ionomer and a polymer obtained by copolymerizing one or more kinds of monomers that derive the monomer units (a) to (d) are blended.
(iii) One or more kinds of monomers that derive the monomer units (a) to (d) (in which (d) is an arbitrary component) and a monomer that derives the monomer unit (e) are copolymerized to form a copolymer; the copolymer and a polymer containing one or more kinds of monomers that derives the monomer units (a) to (d) (in which (d) is an arbitrary component) form a composition; and a part or all of the carboxyl group of the composition is neutralized with a potassium ion.

The potassium ionomer according to the present invention can be obtained by neutralizing the carboxyl group of a polymer having the above-described olefin unit and the like by an oxide, a carbonate, a bicarbonate, a hydroxide and the like of potassium.

It is preferable that the melt flow rate (MFR) measured at 230°C and a load of 2160 g (in accordance with JIS K7210-1999) of the potassium ionomer according to the present invention is usually in the range of 0.1 to 100 g / 10 minutes, preferably in the range of 0.5 to 10 g / 10 minutes in consideration of processability and miscibility with a thermoplastic resin.

The potassium (ion) density in the potassium ionomer according to the present invention is in the range of 0.5 to 1.5 mmol/g (0.5 to 1.5 mmol per 1 g of potassium ionomer). When the potassium (ion) density is in the above range, an unstretched film according to the present invention exhibits an excellent antistatic effect.

The base polymer of the invention, namely, the copolymer comprising the monomer units (a) to (e) in the above specific amounts or a composition comprising the monomer units (a) to (e) in the above specific amounts wherein the composition comprises two or more kinds of polymers, the polymer containing one or two or more kinds of monomer units selected from the monomer units (a) to (e), is selected as needed. Then, the carboxyl group in the polymer or the polymer composition (the carboxyl group in the monomer unit (e)) is neutralized with a potassium ion and the degree of the neutralization is adjusted as needed, whereby a potassium ionomer containing a desired potassium ion amount is obtained. The neutralization with a potassium ion can be performed by allowing the polymer or the polymer composition to react with, for example, a hydroxide of potassium or a potassium salt (such as carbonate), etc.

### <Thermoplastic resin or elastomer>

The thermoplastic resin or elastomer according to the present invention is a thermoplastic resin or an elastomer other than the potassium ionomer. There can be mentioned for instance a homopolymer or a copolymer of olefin such as high-pressure polyethylene, linear low-density polyethylene (such as polyethylene that is produced by using a metallocene catalyst), medium-density polyethylene, high-density polyethylene, polypropylene, poly(1-butene), and poly(4-methyl-1-pentene); a copolymer of ethylene, a vinyl ester such as vinyl acetate and vinyl propionate, and an unsaturated ester such as an unsaturated carboxylic ester such as methyl acrylate, ethyl acrylate, isopropyl acrylate, n-butyl acrylate, isobutyl acrylate, 2-ethylhexyl acrylate, methyl methacrylate, ethyl methacrylate, and dimethyl maleate; an amorphous or low crystallinity α-olefin copolymer in which α-olefins of at least 2 kinds having the number of carbons in the range of 2 to 12 are copolymerized, in which crystallinity measured by X-ray diffractometry is 40% or less, for instance an amorphous or low crystallinity random copolymer of ethylene with α-olefin in which the number of carbons is in the range of 3 to 12; polystyrene; AS resin, ABS resin, styrene-butadiene block copolymer, styrene-butadiene-styrene block copolymer, and hydrogenated additive thereof; styrene-isoprene block copolymer, styrene-isoprene styrene block copolymer, and hydrogen additive thereof; polyamide such as nylon-6, nylon-66, nylon-610, nylon-11, nylon-12, nylon-6·66, nylon-6·12, and nylon-6TI; polyester such as polyethylene terephthalate, polytrimethylene terephthalate, and polytetramethylene terephthalate; polycarbonate; polyacetal; polyphenylene ether; acrylic resin; and polyvinyl chloride.

Among the above thermoplastic resins or elastomers, a polyolefin is preferable from the aspects that a uniform mixing with a potassium ionomer is possible, transparency is higher, and a resin composition that is excellent in processability can be obtained, and a propylene polymer is particularly preferable from the aspects of compatibility with the potassium ionomer and transparency. The above propylene polymer may be a propylene homopolymer and a propylene copolymer.

As the above propylene polymer, from the aspects of compatibility with the potassium ionomer and a low adhesion, propylene homopolymer of a propylene-olefin copolymer in which the content of propylene is less than 100% by weight to 90% by weight and the content of an olefin (other than propylene) is more than 0% by weight to 10% by weight is preferable. As the above olefin, there can be mentioned for instance ethylene and α-olefin in which the number of carbons is in the range of 4 to 12 such as 1-butene, 1-pentene, 1-hexene, and 1-octene.

From the aspects of compatibility with the potassium ionomer according to the present invention, it is preferable that the melt flow rate (MFR) (in accordance with JIS K7210-1999, measured at 190°C (230°C in the case of the propylene polymer) and a load of 2160 g) of the thermoplastic resin or the elastomer according to the present invention, in particular MFR of a polyolefin, is usually in the range of 0.1 to 100 g / 10 minutes, preferably in the range of 0.5 to 50 g / 10 minutes.

### <Resin composition>

The resin composition according to the present invention can be obtained by dry blending or melt blending of the potassium ionomer (A), the thermoplastic resin or elastomer (B) and other additives as needed in a simultaneous manner or in a sequential manner. In the case of dry blending, various kinds of mixers such as a Henschel mixer and a tumbler mixer can be used. In the case of melt blending, the resin composition of the present invention can be obtained by kneading at a temperature in the range of 140°C to 230°C using a kneading machine such as a single-screw extruder or a twin-screw extruder, a Banbury mixer, a roll and a kneader.

The resin composition according to the present invention is obtained by mixing the potassium ionomer in the range of usually less than 100 parts by weight to 2 parts by weight, preferably in the range of 10 parts by weight to 50 parts by weight, and the thermoplastic resin or elastomer in the range of from more than 0 part by weight to 98 parts by weight, preferably 50 to 90 parts by weight (with the total of the potassium ionomer (A) and the thermoplastic resin or elastomer (B) being 100 parts by weight). When the potassium ionomer is in less than 2 parts by weight, the resin composition according to the present invention tends to have an insufficient antistatic property.

The content of (meth)acrylic acid residue contained in the resin composition according to the present invention is usually in the range of 0.1 to 15% by weight. The potassium ion density in the resin composition is usually in the range of 0.01 to 1.5 mmol/g. Consequently, the resin composition has an excellent antistatic property. In the present invention, the (meth)acrylic acid residue means a (meth)acrylic acid unit in a polymer which has not been ionized by a potassium ion.

With respect to the potassium ionomer or the resin composition according to the present invention that can be obtained as described above, the surface resistivity at 23°C and at a relative humidity (RH) of 50% is usually 1.0E + 11 Ω/sq or less, preferably 1.0E + 10 Ω/sq or less, more preferably 1.0E + 9 Ω/sq or less, and the 10% electrostatic charge decay time at 23°C and at a relative humidity (RH) of 50% is usually 20 seconds or less, preferably 10 seconds or less, more preferably 2 seconds or less. When the surface resistivity and the charge decay time are in the above range, the potassium ionomer or the resin composition according to the present invention has an excellent antistatic property.

The unstretched film made of the potassium ionomer or the resin composition according to the present invention has a haze of 20 or less, and thus has an excellent transparency.

With respect to the potassium ionomer or the resin composition according to the present invention, the melt flow rate (MFR) (measured at 230°C and a load of 2160 g) is usually in the range of 0.1 to 100 g / 10 minutes, preferably in the range of 0.5 to 50 g / 10 minutes.

An additive such as an antioxidant, an ultraviolet absorbing agent, a light stabilizer, a pigment, a surfactant (such as anion, cation, and nonionic surfactants) and an antistatic agent can be compounded as needed to the potassium ionomer or the resin composition according to the present invention in a small quantity (for instance approximately 10% by weight or less).

### <Unstretched film, sheet or molded body>

The potassium ionomer or the resin composition according to the present invention can be molded to be various forms such as a film (an unstretched film), a sheet, a pipe, a fiber, and other molded articles. For instance, an unstretched film can be produced by the cast film process and tubular film process, and the sheet and other molded articles can be produced by a known method such as injection molding and blow molding. The thickness of the unstretched film is usually in the range of 1 to 500 µm.

The potassium ionomer or the resin composition according to the present invention can also be processed to be a sheet, a tape, a fiber, a woven fabric, a non-woven fabric, a tube, a pipe, a rod, a bag, a container, a wide variety of injection-molded articles, and a wide variety of hollow-molded articles in addition to the unstretched film.

### <Laminate>

In addition to a use as an unstretched film or a sheet of a single layer, the potassium ionomer or the resin composition according to the present invention can be processed, for example, to be a multilayer laminate comprising at least one layer of the unstretched film made of the resin composition according to the present invention by laminating the resin compositions according to the present invention to each other or by laminating the resin composition according to the present invention to other materials.
In this case, as the other materials, there can be used for instance a wide variety of polymers such as a thermoplastic resin such as polyethylene, polypropylene, polyester and polyamide, a thermoplastic elastomer, a thermosetting resin, a pressure-sensitive adhesive, a paper, a metal, a woven fabric, a non-woven fabric, wood, and ceramics. When the thermoplastic resin is used as the other materials, a layer (a film) made of the thermoplastic resin may be unstretched, uniaxially stretched or biaxially stretched. Among them, a multilayer laminate in which a polyolefin film layer is laminated on one surface or both surfaces of the unstretched film is preferable.

In the above multilayer laminate, it is preferable that the thickness of the unstretched film layer made of the potassium ionomer or the resin composition according to the present invention is in the range of 1 to 500 µm, and the thickness of the layer made of the other materials is in the range of 1 to 5 mm, preferably in the range of 10 to 500 µm.

The laminate according to the present invention may have not only one layer but also at least two layers made of the other materials. As described above, the potassium ionomer or the resin composition according to the present invention can be processed to be a film, a sheet, a tape, a fiber, a woven fabric, a non-woven fabric, a tube, a pipe, a rod, a bag, a container, a wide variety of injection-molded articles and a wide variety of hollow-molded articles as an unstretched film of a single layer or as a laminate of the unstretched film and the other materials. As more specific applications, there can be mentioned for instance a pressure-sensitive adhesive tape or film for a semiconductor such as a dicing tape substrate and a backgrinding film, electrical and electronic materials such as a marking film, an IC carrier tape, an electronic part taping tape, a food packaging material, a sanitary material, a protective film, a steel wire covering material, a clean room curtain, a wallpaper, a mat, a floor material, a flexible container inner bag, a container, shoes, a battery separator, a permeable film, an antifouling film, a dust proofing film, a PVC alternate film, a tube and a bottle of a wide variety of cosmetic items, a detergent, a shampoo, and a rinse.

When the potassium ionomer or the resin composition according to the present invention is used as a dicing tape substrate, for instance, a rubber-based, an acrylic-based or a silicone-based pressure-sensitive adhesive is applied on the tape substrate made of the potassium ionomer or the resin composition, and on the tape substrate, a release film is then bonded to form a product. Since the ionomer or the resin composition according to the present invention has an excellent antistatic property (prevention property of static charge), the ionomer or the resin composition can be used as a macromolecular type antistatic agent. Moreover, since the ionomer or the resin composition according to the present invention has not only an excellent antistatic property but also an excellent high frequency welder property, the ionomer or the resin composition can be used as a material for high frequency fusing, for instance as a single layer film or a laminate film containing the other materials to which a high frequency seal is applied. In order that a laminate film is given the combined properties of an excellent antistatic property and a high frequency sealing property, the ionomer or the resin composition according to the present invention is used as a heat seal layer or a layer adjacent to a heat seal layer. In this case, as the above other materials, there can be mentioned for instance aluminum foil, an aluminum vapor deposition film, a silica vapor deposition film and ethylene-vinyl alcohol copolymer in addition to the above mentioned thermoplastic resin. The laminate film may comprise not only one layer but also at least two layers made of the other materials.

### [Examples]

The present invention will be described in more detail with reference to the following examples. Methods (measurement methods) for evaluating physical properties of the resin composition that contains the potassium ionomer are as follows.

### <Surface resistivity>

A sample was measured after a storage for a period of time of 24 hours under the prescribed conditions of a temperature and a humidity by using HIGH RESTER UP (probe: URS) manufactured by Mitsubishi Chemical Corporation.

### <Electrostatic charge decay time>

An electrostatic charge decay time (a time when an applied voltage +5000V is decayed to an applied voltage +500V (10%)) of a sample that has been stored for 24 hours at 23°C and at a relative humidity (RH) of 50% was measured by using Static Decay Meter Model 4060 manufactured by ETS Corporation of United States.

### <Haze>

A steel wire transmission rate of one sample piece was measured by using Haze Meter in accordance with JIS K 7105.

### [Example 1]

A propylene-α-olefin copolymer was compounded to ethylene-methacrylic acid copolymer to prepare a polymer composition with the following component composition, and a potassium ionomer (hereafter referred to as KIO-A) was obtained by neutralizing a part of the carboxyl group in the polymer composition with a potassium ion (the potassium ion concentration: 0.86 mmol/g, MFR (measured at 230°C and a load of 2160 g): 5.9 g / 10 minutes, density: 932 kg/m³).
(a) ethylene unit: 38.1% by weight
(b) propylene unit: 48.7% by weight
(c) 1-butene unit: 4.1% by weight
(d) acrylic acid ester unit: 0.6% by weight
(e) methacrylic acid unit: 8.5% by weight

### [Example 2]

As a thermoplastic resin, 80 parts by weight of a homopolypropylene resin (mp 161°C, a melt flow rate (MFR) (in accordance with JIS K-7210, measured at 230°C and a load of 2160 g) 3 g / 10 minutes) (hereafter referred to as PP-1) and 20 parts by weight of KIO-A were dry blended, and the thermoplastic resin was extruded by using a cast film machine (40 mmϕ) at 230°C to obtain an unstretched film having a thickness of 50 µm. The cloudiness (haze), surface resistivity and electrostatic charge decay time for the film were measured.

The results are listed in Table 1.

### [Example 3]

An unstretched film was obtained in the same manner as in Example 2, except that PP-1 was used in an amount of 70 parts by weight and KIO-A was used in an amount of 30 parts by weight. The cloudiness (haze), surface resistivity and electrostatic charge decay time for the film were measured.

The results are listed in Table 1.

### [Example 4]

As a thermoplastic resin, 70 parts by weight of a random propylene copolymer resin (mp 139°C, a melt flow rate (MFR) (measured at 230°C and a load of 2160 g) 7 g / 10 minutes) (hereafter referred to as PP-2 ) and 30 parts by weight of KIO-A were dry blended, and the thermoplastic resin was extruded by using a cast film machine (40 mmϕ) at 230°C to obtain an unstretched film having a thickness of 50 µm. The cloudiness (haze), surface resistivity and electrostatic charge decay time for the film were measured.

The results are listed in Table 1.

### [Example 5]

The KIO-A was pressed by using a pressure forming machine at 210°C to obtain a pressed sheet having a thickness of 1 mm.

The measured results of the surface resistivity (Ω/sq) of the sheet are listed in Table 1.

**Table 1**

| Sample name | | Haze (%) | Electrostatic charge decay time (second) | Surface resistivity (Ω/sq) | |
|---|---|---|---|---|---|
| | | | | 23°C×50%RH | 23°C×30%RH |
| Example 2 | PP - 1 (80 parts by weight) + KIO - A (20 parts by weight) | 3.4 | 0.7 | 5.6×10⁹ | 1.1×10¹² |
| Example 3 | PP - 1 (70 parts by weight) + KIO - A (30 parts by weight) | 5.1 | 0.1 | 1.4×10⁹ | 2.3×10¹¹ |
| Example 4 | PP - 2 (70 parts by weight) + KIO - A (30 parts by weight) | 3.1 | 0.3 | 1.6×10⁹ | 3.4×10¹¹ |
| Example 5 | KIO - A | - | - | 2.0×10⁹ | 1.3×10¹¹ |

### [Example 6]

Ethylene-methacrylic acid copolymer (a content of methacrylic acid unit: 20% by weight), propylene-ethylene-1-butene random copolymer (a content of a propylene unit: 95.6% by weight, a content of an ethylene unit: 2.4% by weight, a content of a 1-butene unit: 2.0% by weight) and propylene-1-butene random copolymer (a content of a propylene unit: 72% by weight, a content of a 1-butene unit: 28% by weight) were melt mixed to prepare the polymer composition having the following component composition, and a potassium ionomer (hereafter referred to as KIO-B) was obtained by neutralizing a part of a carboxyl group in the polymer composition with a potassium ion (a potassium ion concentration: 0.86 mmol/g, MFR (measured at 230°C and a load of 2160 g): 5.9 g / 10 minutes, density: 932 kg/m³).
(a) ethylene unit: 38.3% by weight
(b) propylene unit: 49.0% by weight
(c) 1-butene unit: 4.1% by weight
(e) methacrylic acid unit: 8.6% by weight

### [Example 7]

As a thermoplastic resin, 80 parts by weight of a homopolypropylene resin (mp 161°C, a melt flow rate (MFR) (in accordance with JIS K-7210, and measured at 230°C and a load of 2160 g) 3 g / 10 minutes) (hereafter referred to as PP-1) and 20 parts by weight of KIO-B were dry blended, and the thermoplastic resin was extruded by using a cast film machine (40 mmϕ) at 230°C to obtain an unstretched film having a thickness of 50 µm. The cloudiness (haze),a surface resistivity and electrostatic charge decay time for the film were measured.

The results are listed in Table 2.

### [Example 8]

An unstretched film was obtained in the same manner as in Example 7, except that PP-1 was used in an amount of 70 parts by weight and KIO-B was used in an amount of 30 parts by weight. The cloudiness (haze), surface resistivity and electrostatic charge decay time for the film were measured.

The results are listed in Table 2.

### [Example 9]

As a thermoplastic resin, 70 parts by weight of a random propylene copolymer resin (mp 139°C, a melt flow rate (MFR) (measured at 230°C and a load of 2160 g) 7 g / 10 minutes) (hereafter referred to as PP-2) and 30 parts by weight of KIO-B were dry blended, and the thermoplastic resin was extruded by using a cast film machine (40 mmϕ) at 230°C to obtain an unstretched film having a thickness of 50 µm. The cloudiness (haze), surface resistivity and electrostatic charge decay time for the film were measured.

The results are listed in Table 2.

### [Example 10]

The KIO-B was pressed by using a pressure forming machine at 210°C to obtain a pressed sheet having a thickness of 1 mm.

The measured results of a surface resistivity (Ω/sq) of the sheet are listed in Table 2.

**Table 2**

| Sample name | | Haze (%) | Electrostatic charge decay time (second) | Surface resistivity (Ω/sq) | |
|---|---|---|---|---|---|
| | | | | 23°C×50%RH | 23°C×30%RH |
| Example 7 | PP - 1 (80 parts by weight) + KIO - B (20 parts by weight) | 3.4 | 0.7 | 5.6×10⁹ | 1.1×10¹² |
| Example 8 | PP - 1 (70 parts by weight) + KIO - B (30 parts by weight) | 5.1 | 0.1 | 1.4×10⁹ | 2.3×10¹¹ |
| Example 9 | PP - 2 (70 parts by weight) + KIO - B (30 parts by weight) | 3.1 | 0.3 | 1.6×10⁹ | 3.4×10¹¹ |
| Example 10 | KIO - B | - | - | 2.0×10⁹ | 1.3×10¹¹ |
| Example 11 | KIO - C | - | - | 1.6×10⁸ | 2.6×10¹¹ |
| Example 12 | KIO - D | - | - | 3.0×10⁸ | 3.8×10¹¹ |

### [Example 11]

Ethylene-methacrylic acid copolymer (a content of a methacrylic acid unit: 20% by weight), propylene-ethylene-1-butene random copolymer (a content of a propylene unit: 95.6% by weight, a content of an ethylene unit: 2.4% by weight, a content of a 1-butene unit: 2.0% by weight), and propylene-1-butene random copolymer (a content of a propylene unit: 72% by weight, a content of a 1-butene unit: 28% by weight) were melt mixed to prepare a polymer composition, and a potassium ionomer (hereafter referred to as KIO-C) was obtained by neutralizing a part of a carboxyl group in the polymer composition with a potassium ion (a potassium ion concentration: 0.87 mmol/g, MFR (measured at 230°C and a load of 2160 g): 5.5 g / 10 minutes, density: 937 kg/m³).
(a) ethylene unit: 41.9% by weight
(b) propylene unit: 45.1% by weight
(c) 1-butene unit: 3.7% by weight
(e) methacrylic acid unit: 9.3% by weight

The KIO-C was pressed by using a pressure forming machine at 210°C to obtain a pressed sheet having a thickness of 1 mm. The measured results of a surface resistivity (Ω/sq) of the sheet are listed in Table 2.

In the next place, an unstretched film was prepared by using the potassium ionomer similarly to Examples 7 to 9. It is expected that an antistatic performance and a haze of the unstretched film are both excellent.

### [Example 12]

Ethylene-methacrylic acid copolymer (a content of a methacrylic acid unit: 20% by weight), propylene-ethylene-1-butene random copolymer (a content of a propylene unit: 95.6% by weight, a content of an ethylene unit: 2.4% by weight, a content of a 1-butene unit: 2.0% by weight), and propylene-1-butene random copolymer (a content of a propylene unit: 72% by weight, a content of a 1-butene unit: 28% by weight) were melt mixed to prepare a polymer composition, and a potassium ionomer (hereafter referred to as KIO-D) was obtained by neutralizing a part of a carboxyl group in the polymer composition with a potassium ion (a potassium ion concentration: 0.90 mmol/g, MFR (measured at 230°C and a load of 2160 g): 5.0 g / 10 minutes, density: 936 kg/m³).
(a) ethylene unit: 41.9% by weight
(b) propylene unit: 45.1% by weight
(c) 1-butene unit: 3.7% by weight
(e) methacrylic acid unit: 9.3% by weight

The KIO-D was pressed by using a pressure forming machine at 210°C to obtain a pressed sheet having a thickness of 1 mm. The measured results of a surface resistivity (Ω/sq) of the sheet are listed in Table 2.

In the next place, an unstretched film was prepared by using the potassium ionomer similarly to Examples 7 to 9. It is expected that an antistatic performance and a haze of the unstretched film are both excellent.

## Claims

1. A potassium ionomer of a polymer or of a polymer composition, the polymer or the polymer composition comprises (a) an ethylene unit in the range of 30 to 60% by weight, (b) a propylene unit in the range of 30 to 60% by weight, (c) a butene unit in the range of 2 to 10% by weight, (d) a (meth)acrylic acid ester unit in the range of 0 to 10% by weight, and (e) a (meth) acrylic acid unit in the range of 5 to 15% by weight (with the total of the component units (a) to (e) being 100% by weight), wherein the potassium ionomer has a potassium ion density in the range of 0.5 to 1.5 mmol/g.

2. A resin composition comprising the potassium ionomer (A) defined in claim 1 in the range of less than 100 parts by weight to 2 parts by weight, and a thermoplastic resin or an elastomer (B) other than the potassium ionomer (A) in the range of from more than 0 parts by weight to 98 parts by weight (with the total of the potassium ionomer and the thermoplastic resin or the elastomer being 100 parts by weight).

3. The resin composition as defined in claim 2, wherein the thermoplastic resin is a polyolefin.

4. The resin composition as defined in claim 2 or 3, wherein the thermoplastic resin is a propylene homopolymer or a propylene copolymer.

5. The resin composition as defined in any one of claims 2 to 4, wherein the content of a (meth)acrylic acid residue in the resin composition is in the range of 0.1 to 15% by weight and the potassium ion density is in the range of 0.01 to 1.5 mmol/g.

6. The potassium ionomer or the resin composition as defined in any one of claims 1 to 5, wherein the surface resistivity at 23°C and at a relative humidity (RH) of 50% is 1.0E + 11 Ω/sq or less.

7. An unstretched film, a sheet, or a molded body each made of the potassium ionomer or of the resin composition as defined in any one of claims 1 to 6.

8. The unstretched film as defined in claim 7, wherein the haze is 20 or less.

9. A laminate comprising at least one layer formed by the unstretched film made of the potassium ionomer or of the resin composition as defined in any one of claims 1 to 6.

10. A laminate wherein a polyolefin film is laminated on one surface or both surfaces of the unstretched film made of the potassium ionomer or of the resin composition as defined in any one of claims 1 to 6.
